# EUROPÄISCHE PATENTANMELDUNG

(11) **EP 1 081 567 A2**
(43) Veröffentlichungstag der Anmeldung: **07.03.2001**
(21) Anmeldenummer: 00119121.2
(22) Anmeldetag: 04.09.2000
(51) Int. Cl.: G05B 19/048

(54) **Verfahren und Vorrichtung zur Überwachung und/oder Diagnose sich bewegender Maschinen und/oder Maschinenteile**

(30) Priorität: 06.09.1999 DE 19943689
(71) Anmelder: Prüftechnik Dieter Busch AG, 85737 Ismaning (DE)
(72) Erfinder: Franke, Dieter, 01326 Dresden (DE); Lysen, Heinrich, 85748 Garching (DE); Konetschny, Volker, 85640 Putzbrunn (DE)

(57) **Zusammenfassung**

Die Erfindung betrifft ein Verfahren zur Überwachung und/oder Diagnose sich bewegender Maschinen und/oder Maschinenteile, wobei von den Maschinen und/oder Maschinenteilen generierte Schwingungen und/oder Körperschall in Meßsignale umgewandelt werden und diese kontinuierlich erfaßt und einer Frequenzanalyse unterzogen werden, und eine Vorrichtung zur Überwachung sich bewegender Maschinen und/oder Maschinenteile.

Es ist vorgesehen, daß aus einem erfaßten breitbandigen Zeitsignal wenigstens zwei parallele (zeitgleiche) Komponenten herausgefiltert werden, wobei die Amplitude und die Phase der wenigstens zwei parallelen Komponenten erfaßt und ausgewertet werden und/oder fortlaufend verglichen werden und eine durch die Auswertung oder den Vergleich ermittelte Abweichung der Amplituden und/oder der Phasen zu vorhergehenden Zeitpunkten ausgewertet wird.

## Beschreibung

Die Erfindung betrifft ein Verfahren zur Überwachung und/oder Diagnose sich bewegender Maschinen und/oder Maschinenteile mit den im Oberbegriff des Anspruchs 1 genannten Merkmalen sowie eine Vorrichtung zur Durchführung des Verfahrens mit den im Oberbegriff des Anspruchs 12 genannten Merkmalen.

Sich bewegende Maschinen und/oder Maschinenteile generieren während ihres bestimmungsgemäßen Einsatzes Schwingungen und/oder Körperschall. Bekannt ist, derartige Schwingungen und/oder Körperschall als breitbandiges Zeitsignal zu erfassen und einer Frequenzanalyse zu unterziehen. Derartige Frequenzanalysen werden beispielsweise mit einer Fast-Fourier-Transformation durchgeführt, wobei in einem interessierenden Frequenzbereich lückenlos digitalisiert alle einzelnen Spektralanteile des Zeitsignals erfaßt und ausgewertet werden können. Die Durchführung einer Fast-Fourier-Transformation ist sehr aufwendig und erfordert eine dementsprechend große Rechenkapazität. Sie zeigt als Abtastblock nur eine Momentaufnahme oder muß noch aufwendiger mit Lücken laufend gemessen werden und kann dabei gemittelt werden. Dies erfordert einen sehr großen Speicherbedarf.

Bekannt sind ferner Frequenzanalyseverfahren, bei denen das breitbandige Zeitsignal einer diskreten Fourier-Transformation unterzogen wird. Hierbei wird eine einzelne Sinuskomponente des Signals herausgefiltert und ein Amplitudenverlauf dieses Sinussignals ausgewertet. Durch Änderung der Abstimmfrequenz kann die Auswertung auf benachbarte Sinuskomponenten ausgedehnt werden, so daß lokale Amplitudenmaxima ermittelbar sind. Der Rechenaufwand für die Durchführung einer diskreten Fourier-Transformation ist gegenüber der Fast-Fourier-Transformation minimiert, aber immer noch erheblich.

Bei den bekannten Verfahren ist nachteilig, daß trotz einer Frequenzanalyse des breitbandigen Zeitsignals nicht zweifelsfrei auf eine bestimmte Fehler-/Schadensart geschlossen werden kann. Insbesondere, wenn unterschiedliche Fehler/Schäden zu Schwingungs- und/oder Körperschallsignalen mit gleicher spektralen Frequenzkomponente führen, lassen sich diese nicht sicher in einem Frequenzspektrum unterscheiden.

Ebenso ist nachteilig, daß bei oben genannter fortlaufender Frequenzanalyse und Mitteilung der Ergebnisse bei Änderung von Eigenschaften des Meßobjektes, wie der Drehzahl, die Frequenzkomponenten im Frequenzbereich wandern und im Spektrum "verschmieren" und nicht mehr erkannt und zugeordnet werden können.

Der Erfindung liegt daher die Aufgabe zugrunde, ein Verfahren und eine Vorrichtung zu schaffen, mittels denen in einfacher Weise eine Frequenzanalyse eines breitbandigen Zeitsignals erfolgt und eine Zuordnung der gemessenen Signale zu einer bestimmten Schadens-/Fehlerart mit besserer Genauigkeit möglich ist.

Erfindungsgemäß wird diese Aufgabe durch ein Verfahren mit den im Anspruch 1 genannten Merkmalen gelöst. Dadurch, daß aus einem erfaßten breitbandigen Zeitsignal wenigstens zwei parallele, das heißt zeitgleiche, Komponenten als Suchtöne herausgefiltert werden, wobei die Amplitude und die Phase der wenigstens zwei parallelen Komponenten erfaßt und ausgewertet werden, vorzugsweise fortlaufend verglichen werden, und eine durch einen derartigen Vergleich ermittelte Abweichung der Amplituden und/oder der Phasen zu den jeweiligen vorhergehenden Zeitpunkten ausgewertet wird, läßt sich in einfacher Weise eine Frequenzanalyse durchführen, die auch im gleichen Frequenzbereich liegende Fehler und/oder Schadensarten besser unterscheiden kann. Insbesondere durch den Vergleich des zeitlichen Verlaufes der Phase und/oder der Amplitude der wenigstens zwei Komponenten und eine fortlaufende Wiederholung dieser Vorgehensweise läßt sich eine Veränderung der Phase und/oder Amplitude über der Zeit der ausgewählten Komponenten beobachten und diese Änderung der wenigstens zwei Komponenten miteinander verknüpfen. Die Verknüpfung dieser wenigstens zwei Signale kann vorzugsweise durch Integration, Differentation oder andere geeignete analytische Verfahren erfolgen. Sowie sich bei der fortlaufenden Frequenzanalyse Änderungen ergeben, kann über diese Änderungen auf einen wahrscheinlichen Schadensfall/Störfall geschlossen werden.

In bevorzugter Ausgestaltung der Erfindung ist vorgesehen, daß eine erste Komponente der wenigstens zwei parallelen Komponenten eine Hauptkomponente mit einer Hauptsuchfrequenz ist, während die Suchfrequenz der wenigstens einen weiteren Komponente ein einstellbares Verhältnis, insbesondere ein ganzzahliges Vielfaches der Hauptsuchfrequenz ist. Durch eine derartige Definition der wenigstens zwei Komponenten und deren Frequenzanalyse läßt sich die Hauptsuchfrequenz der ersten Komponente anhand bekannter Frequenzbilder von bekannten Schadens-/Fehlerarten definieren, während die wenigstens eine von der Hauptkomponente abhängige weitere Suchfrequenz der weiteren Komponente der Unterscheidung verschiedener Fehler/Schäden dienen kann, die im wesentlichen im gleichen Frequenzbereich liegen.

In weiterer bevorzugter Ausgestaltung der Erfindung ist vorgesehen, daß die Hauptsuchfrequenz eine Drehfrequenz oder ein Vielfaches, insbesondere ein ganzzahliges Vielfaches, der Drehfrequenz eines rotierenden Maschinenteils ist und die wenigstens eine weitere Suchfrequenz in bekannter Beziehung zu der Drehfrequenz beziehungsweise dem Vielfachen der Drehfrequenz steht. Hierdurch läßt sich eine Differenzierung nach allen mit einer Rotordrehfrequenz auftretenden Schadensarten, insbesondere Unwucht, Ausrichtfehler, Unrundheit, Wellenrisse, Kupplungsfehler, Anstreifen, Ausstellresonanz, Instabilität, Rotoreinspannung, Rotordurchbiegung, Rotorresonanz, mit besserer Genauigkeit erreichen.

Ferner ist in bevorzugter Ausgestaltung der Erfindung vorgesehen, daß die Hauptsuchfrequenz der ersten Komponente durch ein Triggersignal gewonnen wird, das der aktuellen Rotordrehfrequenz entspricht. Hierdurch läßt sich das Frequenzanalyseverfahren mit hoher Genauigkeit auf momentane Betriebsparameter, insbesondere eine Drehzahl des zu überwachenden rotierenden Maschinenteils, abstimmen. Im Gegensatz zur Blockabtastung der Fast-Fourier-Transformation kann damit an die Drehfrequenz angepaßt bei laufender Änderung der Drehzahl mit geringstem Aufwand fortlaufend genauestens gemessen werden. Eine spezifische Schwingungskomponente bleibt bei Skalierung auf die Ordnung der Drehzahl exakt erhalten. Ein sogenanntes, eingangs genanntes Verschmieren ist hierdurch verhindert.

Erfindungsgemäß wird die Aufgabe weiterhin durch eine Vorrichtung mit den im Anspruch 12 genannten Merkmalen gelöst. Dadurch, daß wenigstens zwei Suchtonanalysatoren parallelgeschaltet sind, an deren Signaleingängen zeitgleich das breitbandige Zeitsignal anliegt, und jeweils auf eine wählbare Frequenz abstimmbar sind, und die der jeweiligen Frequenz entsprechende Komponente des breitbandigen Zeitsignales in ein Amplitudensignal und ein Phasensignal überführbar ist, und eine Auswerteschaltung zum Erfassen der wenigstens zwei Amplitudensignale und der wenigstens zwei Phasensignale vorgesehen ist, läßt sich in einfacher Weise eine zeitgleiche Auswertung der wenigstens zwei Komponenten erzielen. Die parallelgeschalteten Suchtonanalysatoren gestatten hierbei die Bereitstellung von Phasensignalen und Amplitudensignalen der jeweiligen Komponente des Zeitsignales, die mit der nachgeschalteten Auswerteeinrichtung auswertbar sind. Durch Definition der Abstimmfrequenz der jeweiligen Suchtonanalysatoren läßt sich eine definierte Frequenzanalyse des breitbandigen Zeitsignales in einfacher Weise realisieren.

Ferner ist bevorzugt, wenn den wenigstens zwei parallelgeschalteten Suchtonanalysatoren ein einzelner Suchtonanalysator in Reihe vorgeschaltet ist. Hierdurch läßt sich vorteilhaft erreichen, daß mittels des vorgeschalteten Suchtonanalysators zunächst eine Bandbreite des breitbandigen Zeitsignales bestimmt wird, innerhalb der nachfolgend die wenigstens zwei Komponenten mittels den dann parallelgeschalteten Suchtonanalysatoren ausgewertet werden. Hierdurch läßt sich insbesondere ein eine derartige Vorrichtung aufweisendes Meßinstrument oder dergleichen in einfacher Weise auf unterschiedliche Frequenzen, das heißt auf unterschiedlich zu untersuchende Schadens- oder Fehlerarten, abstimmen.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: ein Blockschaltbild eines Suchtonanalysators;
- Figur 2: eine Verschaltung mehrerer Suchtonanalysatoren zur Überwachung sich bewegender Maschinen und/oder Maschinenteile und
- Figur 3: eine Verschaltung mehrerer Suchtonanalysatoren zur Überwachung sich bewegender Maschinen und/oder Maschinenteile in einer weiteren Ausführungsvariante.

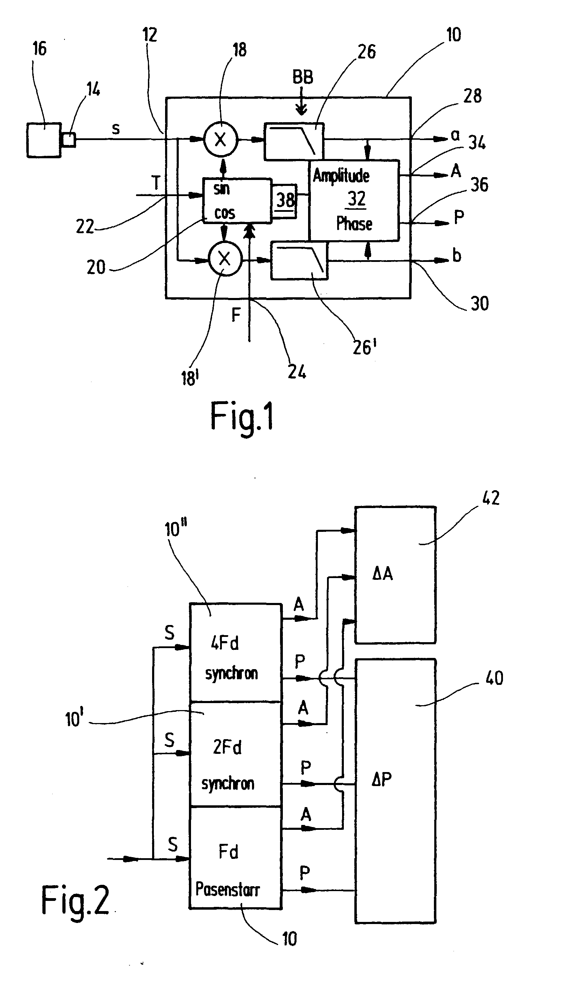

Figur 1 zeigt in einem Blockschaltbild einen sogenannten Suchtonanalysator 10. Der Suchtonanalysator 10 besitzt einen Signaleingang 12, an dem ein Signal S anliegt, das über einen Signalaufnehmer 14 von einer zu überwachenden Maschine beziehungsweise einem Maschinenteil 16 abgegriffen wird. Bei der Maschine beziehungsweise dem Maschinenteil 16 kann es sich beispielsweise um in Schwingungen versetzbare Maschinen beziehungsweise Maschinenteile oder um in Rotation versetzbare Maschinen beziehungsweise Maschinenteile handeln. Der Signalaufnehmer 14 ist beispielsweise ein Körperschallsignalsensor (Beschleunigungssensor).

Der Signaleingang 12 ist mit Multiplizierern 18 beziehungsweise 18' verbunden, mittels denen das Signal S mit von einem Frequenzgenerator 20 gelieferten Sinus- beziehungsweise Kosinusfaktoren multiplizierbar ist. Der Frequenzgenerator 20 ist mit einem Signaleingang 22 verbunden, an den ein Triggersignal T legbar ist. Ferner ist der Frequenzgenerator 20 mit einem Signaleingang 24 verbunden, an den ein Frequenzeinstellungssignal F legbar ist. Den Multiplizierern 18 beziehungsweise 18' sind digitale Tiefpaßfilter 26 beziehungsweise 26' nachgeschaltet. Der Tiefpaßfilter 26 ist mit einem Ausgang 28 verbunden, an dem ein Realteil a des demodulierten Signales S anliegt. Der Tiefpaßfilter 26' ist mit einem Ausgang 30 verbunden, an dem ein Imaginärteil b des Signales S anliegt. Die Tiefpaßfilter 26, 26' sind ferner mit einem Demodulator 32 verbunden, an dessen Signalausgängen 34 beziehungsweise 36 ein Amplitudensignal A beziehungsweise ein Phasensignal P des Signales S anliegt. Dem Demodulator 32 ist ein Phasenregler 38 zugeordnet. Die Tiefpaßfilter 26 beziehungsweise 26' sind mit einem Bandbreitensignal BB zur Einstellung einer Bandbreite beaufschlagbar.

Der in Figur 1 gezeigte Suchtonanalysator 10 zeigt folgende Funktion:

Über die Multiplizierer 18 beziehungsweise 18' wird das Signal S mit dem Sinus beziehungsweise Kosinus des Frequenzgenerators 20 multipliziert. Über den Signaleingang 24 kann eine Frequenz des Frequenzgenerators 20 eingestellt werden. Über das Frequenzsignal F kann somit die Komponente (Spektrallinie) des Signales S herausgefiltert werden, die auf ihren Amplituden- und Phasenverlauf untersucht werden soll. Über das Triggersignal T kann ein Betriebsparameter der Maschine beziehungsweise des Maschinenteils 16 repräsentierender Betriebsparameter, beispielsweise eine Drehfrequenz, mitgeführt werden, so daß eine Abstimmung auf die Suchkomponente möglich ist.

Die in Figur 1 gezeigten Suchtonanalysatoren werden nunmehr erfindungsgemäß parallelgeschaltet, so daß gleichzeitig eine Auswertung mehrerer Komponenten (Spektrallinien) des Signales S möglich ist. Figur 2 zeigt hierzu eine mögliche Schaltungsanordnung. Hierbei sind drei Suchtonanalysatoren 10, 10' beziehungsweise 10'' parallelgeschaltet. Aufbau und Funktion der Suchtonanalysatoren entsprechen dem in Figur 1 gezeigten Ausführungsbeispiel. Das Signal S liegt nunmehr an den Signaleingängen 12 jeder der Suchtonanalysatoren 10, 10' beziehungsweise 10'' an. Durch die Parallelschaltung von drei Suchtonanalysatoren können mit der in Figur 2 gezeigten Schaltungsanordnung drei Komponenten zeitgleich ausgewertet werden. Hierbei wird über den Suchtonanalysator 10 eine Hauptkomponente, das heißt eine Hauptsuchfrequenz, des Signales S bearbeitet. Bei dem in Figur 2 gezeigten Ausführungsbeispiel wird davon ausgegangen, daß eine Frequenzanalyse eines Signales S eines rotierenden Maschinenteiles 16 (Figur 1) untersucht werden soll. Als Hauptkomponente wird hierbei eine Drehfrequenz Fd des rotierenden Teiles, beispielsweise einer Welle, definiert. Über die Suchtonanalysatoren 10' beziehungsweise 10'' werden von der Hauptsuchfrequenz Fd definiert abhängige Komponenten des Signales S untersucht. Zum Beispiel ist vorgesehen, daß mittels des Suchtonanalysators 10' die zweifache Drehfrequenz Fd und mittels des Suchtonanalysators 10'' die vierfache Drehfrequenz Fd analysiert werden.

An den Ausgängen 30 liegen jeweils die Phasensignale P an, die einer Auswerteeinheit 40 zugeführt werden.

Der Auswerteeinheit 40 stehen somit die Phasensignale der Hauptsuchfrequenz Fd und der hiervon in definiertem Verhältnis stehenden Frequenzen 2Fd beziehungsweise 4Fd zur Verfügung. Diese Phasensignale sind zeitgleich ermittelt. Somit kann bei fortlaufender Messung des Signales S, wobei eine Zeitdauer von mehreren Sekunden bis mehreren Minuten oder noch länger gewählt sein kann, eine Phasenlage und eine Relation der Phasenlagen zueinander erfaßt werden.

In vollkommen analoger Weise kann über eine Auswerteeinheit 42 das Amplitudensignal der drei Suchtonanalysatoren 10, 10' beziehungsweise 10'' ausgewertet werden. Die Auswertung der Phasensignale P und der Amplitudensignale A kann auf vielfältige Weise erfolgen. Beispielsweise kann vorgesehen sein, daß die Relation der Amplitudensignale A zueinander und deren Veränderung der Höhe über der Zeit ermittelt werden. Ferner können die Phasensignale P in ihrer Relation zueinander ausgewertet werden. Derartige Zeitverläufe der einzelnen Amplitudensignale A und/oder Phasensignale P sowie sich ändernde Relationen der Amplitudensignale A und/oder Phasensignale P zueinander lassen auf bestimmte Ursachen für das Entstehen des gemessenen Signales S schließen. Bei rotierenden Teilen kann somit auf typische Fehler beziehungsweise Schäden geschlossen werden, die allesamt mit der Drehfrequenz Fd auftreten. Durch die zeitgleiche Analyse weiterer definierter Komponenten des Signales S, hier der zweifachen Drehfrequenz Fd und der vierfachen Drehfrequenz Fd, insbesondere deren Auswertung der Amplitudensignale A und Phasensignale P, kann beispielsweise besser zwischen Unwucht, Ausrichtfehler, Unrundheit, Wellenrisse, Kupplungsfehler, Anstreifung, Ausstellresonanz, Instabilität, Rotoreinspannung, Rotordurchbiegung, Rotorresonanz oder dergleichen unterschieden werden.

Bei einem konkreten Ausführungsbeispiel kann eine lose Schraubverbindung bei der Befestigung eines rotierend gelagerten Teiles detektiert werden, da diese typischerweise bei der zweifachen Drehfrequenz Fd und der vierfachen Drehfrequenz Fd erhöhte Amplitudensignale A besitzt, die bis zu 50 % der Höhe des Amplitudensignales A der Drehfrequenz Fd betragen. Die zugehörigen Phasensignale P sind in ihrem Zeitverlauf stark schwankend, so daß eine relativ eindeutige Zuordnung zu der beispielsweise losen Schraubverbindung erfolgen kann.

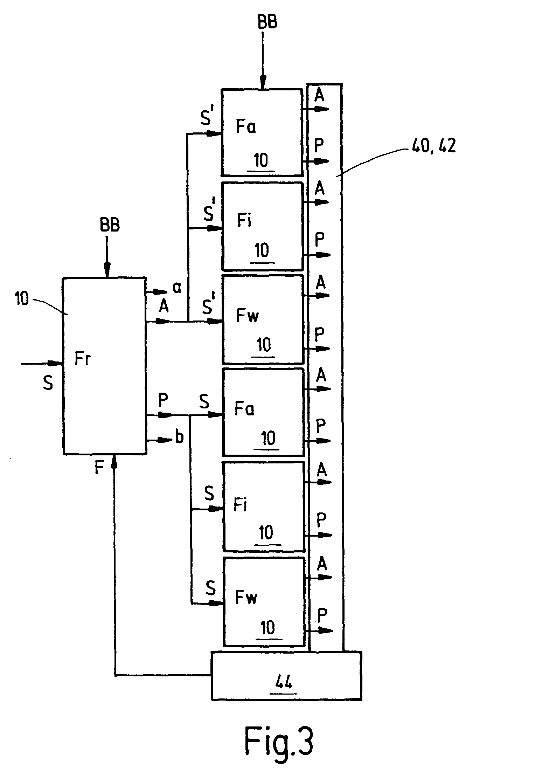

Figur 3 zeigt ein weiteres Ausführungsbeispiel der Anordnung von Suchtonanalysatoren 10. Gleiche Teile wie in vorhergehenden Figuren sind mit gleichen Bezugszeichen versehen und nicht nochmals erläutert.

Figur 3 sieht eine Kaskadenschaltung von Suchtonanalysatoren 10 vor. Zunächst wird das breitbandige Zeitsignal S einem ersten Suchtonanalysator 10 zugeführt. Dieser Suchtonanalysator 10 wird über einen Regler 44 mit einer Frequenzeinstellung F betrieben, die beispielsweise einer Resonanzfrequenz Fr eines Wälzlagerbauteiles entspricht. Die Bandbreiteneinstellung BB entspricht hierbei wenigstens dem zweifachen Wert einer zu analysierenden Schadensfrequenz. Mit dem Suchtonanalysator 10 werden, wie zu Figur 1 erläutert, aus dem Eingangssignal S demodulierte Amplitudensignale A und Phasensignale P sowie Realteil a und Imaginärteil b gewonnen.

Die demodulierten Amplitudensignale A werden als neues Eingangssignal S' auf die Signaleingänge 12 von parallelgeschalteten weiteren Suchtonanalysatoren 10 gelegt, während die Phasensignale P ebenfalls an Signaleingänge 12 weiterer drei parallelgeschalteter Suchtonanalysatoren 10 gelegt sind. Aufbau und Funktion der parallelgeschalteten Suchtonanalysatoren 10 entsprechen wiederum dem Aufbau des in Figur 1 bereits erläuterten Suchtonanalysators 10. Entsprechend werden Amplitudensignale A und Phasensignale P bereitgestellt und der Auswerteeinheit 40 beziehungsweise 42 zur Verfügung gestellt. Die Frequenzeinstellung F der einzelnen parallelgeschalteten Suchtonanalysatoren 10 wird entsprechend einer zu ermittelnden Schadensart gewählt. Hierbei wird ein erster Suchtonanalysator 10 beispielsweise mit einer Frequenz Fa, die einem Außenringschaden entspricht, ein zweiter Suchtonanalysator 10 mit einer Frequenz Fi, die einem Innenringschaden entspricht, und ein dritter Suchtonanalysator 10 mit einer Frequenz Fw, die einem Wälzkörperschaden entspricht, betrieben. Entsprechend dieser ausgewählten Komponenten werden zeitgleich die Amplituden- und Phasensignale A, P bereitgestellt. Über die Auswerteeinheiten 40, 42 kann nunmehr die bereits erläuterte Auswertung des zeitlichen Verlaufs beziehungsweise Änderungen der Relation der einzelnen von den Suchtonanalysatoren 10 gelieferten Amplitudensignale A beziehungsweise Phasensignale P erfolgen.

Die Bandbreiteneinstellung BB der zweiten Suchtonanalysatoren 10 ist relativ schmalbandig eingestellt und beträgt beispielsweise 3 % der Schadensfrequenz, so daß sehr exakt einzelne Komponenten des ursprünglichen breitbandigen Zeitsignals S ausgewertet werden können.

Anstelle der Auswertung der Amplitudensignale A und Phasensignale P können auf die durch den Suchtonanalysator 10 bereitgestellten Realteile a und Imaginärteile b als komplexe Signale ausgewertet werden. Hierzu sind die zweiten Suchtonanalysatoren 10 dann als komplexe Synchrondemodulatoren ausgebildet.

Es wird deutlich, daß durch die erfindungsgemäße Anordnung der Suchtonanalysatoren und das Frequenzanalyseverfahren mehrere parallele schmalbandige Filterungen beziehungsweise Demodulationen von Komponenten des breitbandigen Zeitsignals S durchgeführt werden, wobei eine der Komponenten als Hauptkomponente definiert ist, und die als Amplitudensignale A und Phasensignale P vorliegenden Ergebnisse dieser Demodulationen über eine Zeitdauer gemessen und ausgewertet werden. Die Auswertung der Amplitudensignale A und Phasensignale P kann nach linearen oder statistischen Signalverarbeitungsverfahren erfolgen, wobei die Amplitudensignale A und die Phasensignale P der einzelnen Suchtonanalysatoren einzeln ausgewertet oder die der parallelgeschalteten Suchtonanalysatoren in Relationen zueinander ausgewertet werden. Hierbei kann insbesondere ein Zeitverlauf der Änderungen der Amplitudensignale A, der Unterschiede der Amplitudensignale A, der Phasensignale P und/oder von Phasendifferenzen zwischen den Phasensignalen P absolut ausgewertet werden oder beispielsweise bei rotierenden Maschinenteilen in bezug zu einer Rotationsposition dargestellt werden.

Eine Anzeige der ermittelten Amplitudensignale und Phasensignale beziehungsweise deren Relation zueinander kann in Balkendiagrammen, Tortendiagrammen, Matrixdarstellungen oder dergleichen erfolgen, wobei über der Zeit sich ergebende Änderungen sofort bei der Darstellung in dem Diagramm Berücksichtigung finden. Neben einer aktuellen Anzeige der ausgewerteten Amplitudensignale A und Phasensignale P können diese selbstverständlich zwischengespeichert und später ausgewertet werden.

Alles in allem ist zu der vorgeschlagenen Frequenzanalyse des breitbandigen Zeitsignals S ein im Verhältnis geringer Rechenaufwand notwendig, so daß das vorgeschlagene Verfahren und die Vorrichtung zur Überwachung sich bewegender Maschinen und/oder Maschinenteile vorteilhaft in relativ kleinen tragbaren Überwachungseinrichtungen realisiert werden kann. Somit ist insbesondere in einfacher Weise eine Vorortanalyse möglich.

## Patentansprüche

1. Verfahren zur Überwachung und/oder Diagnose sich bewegender Maschinen und/oder Maschinenteile, wobei von den Maschinen und/oder Maschinenteilen generierte Schwingungen und/oder Körperschall in Meßsignale umgewandelt werden und diese kontinuierlich erfaßt und einer Frequenzanalyse unterzogen werden,
indem aus einem erfaßten breitbandigen Zeitsignal wenigstens zwei parallele (zeitgleiche) Komponenten herausgefiltert werden,
wobei die Amplitude und die Phase der wenigstens zwei parallelen Komponenten erfaßt und ausgewertet werden und/oder fortlaufend verglichen werden
und eine durch die Auswertung oder den Vergleich ermittelte Abweichung der Amplituden und/oder der Phasen zu vorhergehenden Zeitpunkten ausgewertet wird.

2. Verfahren nach Anspruch 1, **dadurch gekennzeichnet**, daß eine erste Komponente der wenigstens zwei parallelen Komponenten eine Hauptkomponente mit ihrer Hauptsuchfrequenz ist, während die Suchfrequenz der wenigstens einen weiteren Komponente ein einstellbares Verhältnis zu der Hauptsuchfrequenz besitzt.

3. Verfahren nach Anspruch 2, **dadurch gekennzeichnet**, daß die Suchfrequenz der wenigstens einen weiteren Komponente ein ganzzahliges Vielfaches der Hauptsuchfrequenz ist.

4. Verfahren nach einem der vorhergehenden Ansprüche, **dadurch gekennzeichnet**, daß die Hauptsuchfrequenz eine Drehfrequenz oder ein Vielfaches, insbesondere ein ganzzahliges Vielfaches, der Drehfrequenz eines rotierenden Maschinenteils ist und die wenigstens eine weitere Suchfrequenz in bekannter Beziehung zu der Drehfrequenz beziehungsweise dem Vielfachen der Drehfrequenz steht.

5. Verfahren nach einem der vorhergehenden Ansprüche, **dadurch gekennzeichnet**, daß die Hauptsuchfrequenz der ersten Komponente durch ein Triggersignal bei rotierenden Maschinenteilen auf die aktuellen Rotordrehfrequenz synchronisiert wird.

6. Verfahren nach einem der vorhergehenden Ansprüche, **dadurch gekennzeichnet**, daß die Komponenten durch Synchrondemodulation aus dem breitbandigen Zeitsignal gefiltert werden.

7. Verfahren nach einem der vorhergehenden Ansprüche, **dadurch gekennzeichnet**, daß die Relation der Amplitudensignale der wenigstens zwei Komponenten zueinander und deren Veränderung der Höhe über der Zeit ermittelt und ausgewertet werden.

8. Verfahren nach einem der vorhergehenden Ansprüche, **dadurch gekennzeichnet**, daß die Phasensignale der wenigstens zwei Komponenten in ihrer Relation zueinander und in ihrem Zeitverlauf ermittelt und ausgewertet werden.

9. Verfahren nach einem der vorhergehenden Ansprüche, **dadurch gekennzeichnet**, daß die Amplitudensignale beziehungsweise eine Änderung der Amplitudensignale der wenigstens zwei Komponenten ins Verhältnis mit den Phasensignalen beziehungsweise einer Änderung der Phasensignale der wenigstens zwei Komponenten gesetzt werden.

10. Verfahren nach Anspruch 8 und 9, **dadurch gekennzeichnet**, daß die Auswertung über den Zeitverlauf nach Synchronisation auf die Drehzahl nach Anspruch 5 und 14 mit Hilfe des Signals der Triggermarke über dem Drehwinkel der Welle dargestellt werden.

11. Verfahren nach einem der vorhergehenden Ansprüchen, **dadurch gekennzeichnet**, daß die gewonnen einzelnen Phasenwerte zur Korrektur der jeweiligen Amplitudenwerte umgerechnet und auf diese jeweils aufaddiert werden.

12. Vorrichtung zur Überwachung sich bewegender Maschinen und/oder Maschinenteile mit einem Signalaufnehmer zum Erfassen eines breitbandigen Zeitsignals von der Maschine und/oder dem Maschinenteil generierten Schwingungen und/oder Körperschallsignalen, mit einer Frequenzauswerteeinheit, **gekennzeichnet durch** wenigstens zwei parallelgeschaltete Suchtonanalysatoren (10, 10'), an deren Signaleingängen (12) zeitgleich das breitbandige Zeitsignal (S) anliegt, und die jeweils auf eine wählbare Frequenz abstimmbar sind, und die der jeweiligen Frequenz entsprechende Komponente des breitbandigen Zeitsignals (S) in ein Amplitudensignal (A) und ein Phasensignal (P) überführbar ist, und eine Auswerteschaltung (40, 42) zum Erfassen der wenigstens zwei Amplitudensignale (A) und der wenigstens zwei Phasensignale (P).

13. Vorrichtung nach Anspruch 12, **dadurch gekennzeichnet**, daß bis zu zehn Suchtonanalysatoren parallelgeschaltet sind.

14. Vorrichtung nach einem der Ansprüche 12 oder 13, **dadurch gekennzeichnet**, daß den wenigstens zwei parallelgeschalteten Suchtonanalysatoren (10) ein einzelner Suchtonanalysator (10) in Reihe vorgeschaltet ist.

15. Vorrichtung nach einem der vorhergehenden Ansprüche, **dadurch gekennzeichnet**, daß die Suchtonanalysatoren (10) einen Frequenzgenerator (20) umfassen, der mittels eines an einen Signaleingang (24) legbaren Frequenzeinstellungssignals abstimmbar ist.

16. Vorrichtung nach einem der vorhergehenden Ansprüche, **dadurch gekennzeichnet**, daß der Frequenzgenerator (20) einen Signaleingang (22) umfaßt, an den ein Triggersignal (T) zur Mitführung eines Betriebsparameters der zu überwachenden Maschine beziehungsweise des Maschinenteiles (16) legbar ist.
